**Europäisches Patentamt**

**European Patent Office**

**Office européen des brevets**

(11) Veröffentlichungsnummer: **0 070 442**
**B1**

(12) **EUROPÄISCHE PATENTSCHRIFT**

(45) Veröffentlichungstag der Patentschrift:
**08.01.86**

(51) Int. Cl.⁴: **G 01 L 1/12,** A 01 B 63/112

(21) Anmeldenummer: **82105954.0**

(22) Anmeldetag: **31.01.81**

(60) Veröffentlichungsnummer der früheren Anmeldung
nach Art. 76 EPÜ: **0033923**

(54) **Magnetoelastischer Kraftmesser zur Messung von Schubspannungen.**

(30) Priorität: **08.02.80 DE 3004592**

(43) Veröffentlichungstag der Anmeldung:
**26.01.83 Patentblatt 83/4**

(45) Bekanntmachung des Hinweises auf die Patenterteilung:
**08.01.86 Patentblatt 86/2**

(84) Benannte Vertragsstaaten:
**AT DE FR GB IT**

(56) Entgegenhaltungen:
**CH - A - 565 365**
**DE - B - 1 648 334**
**DE - B - 1 961 280**
**GB - A - 1 068 336**
**US - A - 3 516 498**
**US - A - 3 814 188**

(73) Patentinhaber: **ROBERT BOSCH GMBH, Postfach 50,
D-7000 Stuttgart 1 (DE)**

(72) Erfinder: **Romes, Roman, Lindenstrasse 39,
D-7251 Friolzheim (DE)**

# Beschreibung

## Stand der Technik

Die Erfindung geht aus von einem magnetoelastischen Kraftmesser zur Bestimmung der auf ein bewegliches kraftübertragendes Element einer Maschine einwirkenden Kraft durch Messung von Schubspannungen nach der Gattung des Anspruchs 1. Es ist schon ein solcher Kraftmesser aus der DE-C 1 961 280 bekannt, bei dem ein balkenartiges Bauelement aus ferromagnetischem Material besteht und im Abstand voneinander eine Einspannstelle und eine Krafteinleitungsstelle aufweist. Im Bereich zwischen beiden Stellen liegende Aussparungen im Bauelement bilden sich kreuzende Stege, welche als Kerne einer Primär- und Sekundärspule dienen. Bei diesem Kraftmesser kann die angreifende Kraft nur in einer definierten Richtung wirken, was seine Verwendung in vielen Fällen erschwert. Ferner baut der Kraftmesser relativ lang, da die eigentliche Messzone mit den Spulen im Abstand von der Krafteinleitungsstelle liegen muss. Ausserdem führt die Ausbildung und Anordnung der Stege und Spulen zu einer aufwendigen Bauweise, da die Kerne integrale Bestandteile des Bauelementes bilden und von der auftretenden Schubspannung belastet sind.

Ferner ist eine elektrohydraulische Steuereinrichtung zum Betätigen eines Hubwerks von landwirtschaftlichen Arbeitsfahrzeugen aus der US-A 3 814 188 bekannt, bei der zur Kraftmessung jeder Unterlenker eines elektrohydraulisch betätigbaren Dreipunktgestänges über einen Biegestab gehäusefest gelagert ist. Jeder Biegestab hat einen zylindrischen Abschnitt zwischen seinem fest eingespannten Ende und seinem den Unterlenker tragenden Ende, in dem an seiner Oberfläche Dehnmessstreifen angeordnet sind, welche abhängig von den von den Unterlenkern übertragenen Kräften elektrische Signale an eine Verstärkereinrichtung senden. Beide Biegestäbe sind mit ihren Dehnmessstreifen tragenden Bereichen im Inneren eines gehäusefest angeordneten Schutzrohres angeordnet. Nachteilig bei dieser Steuereinrichtung ist, dass diese Ausbildung und Anordnung der Geber einen hohen Bauaufwand erfordert. So sind hier teuere Biegestäbe aus hochwertigem Material notwendig, die zudem viel Bauraum beanspruchen. Ausserdem ist die Montage der Geber schwierig. Bei einem defekten Geber müssen hier die Unterlenker sowie das Schutzrohr mit den Biegestäben ausgebaut werden. Ein Einbau von Ersatzteilen gestaltet sich dadurch aufwendig hinsichtlich Zeit- und Materialeinsatz. Ferner ist die Durchführung der elektrischen Kabel von den Dehnmessstreifen zur elektrischen Schalteinrichtung durch Bohrungen im Schutzrohr relativ störanfällig und umständlich.

Ferner ist aus der GB-A 1 068 336 eine elektrohydraulische Steuereinrichtung zum Betätigen des Dreipunktgestänges in einem Traktor bekannt, bei der die Kräfte im Unterlenker über Dehnmessstreifen erfasst werden. Zu diesem Zweck weist jeder Unterlenker eine kreisförmige Aussparung auf, an deren Wand ringförmig vier Dehnmessstreifen in Brückenschaltung angeordnet sind. Nachteilig bei dieser Lösung ist, dass sie ebenfalls mit relativ empfindlichen Dehnmessstreifen arbeitet. Das Aufkleben, Anschliessen und Abdecken der Dehnmessstreifen ist eine zeitaufwendige, überwiegend manuelle Tätigkeit. Zudem sind sie in beweglichen Teilen angeordnet. Dadurch gestaltet sich die Ableitung der Messsignale relativ schwierig. Ferner müssen die Unterlenker hierzu speziell ausgerüstet werden. Bei einem defekten Messwertgeber kann es notwendig werden, einen gesamten Unterlenker auszutauschen. Diese Bauart ist ferner wenig montagefreundlich und eignet sich schlecht für den rauhen Betrieb bei landwirtschaftlichen Fahrzeugen.

Ferner ist aus der US-A 3 516 498 eine elektrohydraulische Steuereinrichtung für den Kraftheber eines Traktors bekannt, die auf einen Unterlenker einwirkt. Der Unterlenker ist hier über einen Schwinghebel am Gehäuse des Traktors gelagert und zusätzlich an einem Kniehebelgestänge angelenkt. Zum Messen der im Unterlenker auftretenden Kräfte steht das von einer Spiralfeder abgestützte Kniehebelgestänge mit einem induktiv arbeitenden Wegaufnehmer in Verbindung. Nachteilig bei dieser Lösung ist vor allem der hohe Bauaufwand für die Ermittlung der Kräfte im Unterlenker.

Bekannt ist es auch, zur Messung von Drehmomenten an einer Welle magnetoelastische Transformatorgeber zu verwenden (Ch. Rohrbach, Handbuch für elektr. Messen mechanischer Grössen, 1967). Bei diesem Geber wird ein ortsfest angeordneter, weichmagnetischer Kern mit Primärspulen und Sekundärspulen an die Welle herangeführt. Infolge der bei der Übertragung des Moments auftretenden Zug- und Druckspannungen in der Welle ändert sich deren Permeabilität. Aus den damit verbundenen Kopplungsänderungen zwischen den Spulen lässt sich eine Messspannung ableiten, die proportional zu dem von der Welle übertragenen Moment ist. Dieser Geber dient nur zu Drehmomentmessung und dient nicht zur Steuerung einer elektrohydraulischen Steuereinrichtung bei Traktoren.

Ferner ist aus der CH-A 565 365 ein magnetoelastischer Kraftmesser bekannt, der in einer Hülse aus magnetostriktivem Material einen zylindrischen Kern mit einer Erreger- und einer Messspule aufweist. Beide Spulen liegen in zueinander senkrecht stehenden Ebenen, in denen auch die Längsachse der Hülse verläuft. Die aussen leicht konisch ausgebildete Hülse sitzt eng anliegend in einer passenden Sacklochbohrung in einem Maschinenteil, dessen Belastung senkrecht zur Längsachse der Hülse verläuft, wobei die Spannung im Maschinenteil gut auf die Hülse übertragen wird. Der den Kern aufnehmende Abschnitt der Hülse liegt vollständig im Maschinenteil, während die elektrischen Anschlüsse über einen aus dem Maschinenteil herausragenden Abschnitt der Hülse herausgeführt sind.

Nachteilig bei diesem Kraftmesser ist, dass er nur Zug- und Druckspannungen im Maschinenteil ermitteln kann, aber keine Schubspannungen, weil die vier Pole des Kerns alle in derselben Ebene gleichmässig längs des Umfangs verteilt sind. Ein auf Scherung beanspruchter Querschnitt der Hülse fehlt hier.

Vorteile der Erfindung

Der erfindungsgemässe magnetoelastische Kraftmesser mit den kennzeichnenden Merkmalen des Anspruchs 1 hat demgegenüber den Vorteil, dass er besonders einfach und robust baut und über die Schubspannung die zu ermittelnde Kraft in einem schwenkbar auf dem Bolzen gelagerten, kraftübertragenden Element einer Maschine misst. Da somit ein ohnedies vorhandener Bolzen als Teil des Kraftmessers verwendet wird, ist der notwendige Aufwand relativ gering. Der Kraftmesser arbeitet verschleissfrei und hält einen robusten Betrieb aus. Die Bauweise des Kraftmessers führt zu einer montagefreundlichen Einrichtung, zumal die elektrischen Anschlüsse aus einem meist unbewegten Teil herausgeführt werden. Ferner lässt sich dieser Kraftmesser leicht nachträglich bei bereits vorhandenen Einrichtungen einbauen. Die Kraftrichtung kann dabei veränderlich sein, wobei die Schubspannung nur in der gewünschten Richtung ermittelt wird. Die einfache Bauweise wird vor allem dadurch begünstigt, dass die die Spulen tragenden Spulenkerne von dem die Kraft übertragenden, rohrförmigen Bolzen getrennt gefertigt werden können.

Durch die in den abhängigen Ansprüchen aufgeführten Massnahmen sind vorteilhafte Weiterbildungen und Verbesserungen des im Anspruch 1 angegebenen Kraftmessers möglich. Besonders vorteilhaft ist eine Ausbildung gemäss Anspruch 2, wodurch ein besonders wirkungsvoll arbeitender Kraftmesser möglich ist; zudem baut er dadurch besonders kompakt, da die als Schwenklager dienende Krafteinleitungsstelle am Bolzen und dessen Lagerstelle in der Maschine unmittelbar nebeneinander und somit im Bereich der Messebene liegen können. Die robuste, einfache und kompakte Bauart des Kraftmessers bei gutem Nutzsignal des Kraftmessers wird noch begünstigt durch eine Ausbildung gemäss den Ansprüchen 3 bis 5. Besonders vorteilhaft ist eine Ausbildung des Kraftmessers gemäss den Ansprüchen 6 bis 9, wodurch vor allem ein höheres Nutzsignal erreichbar ist.

Zeichnung

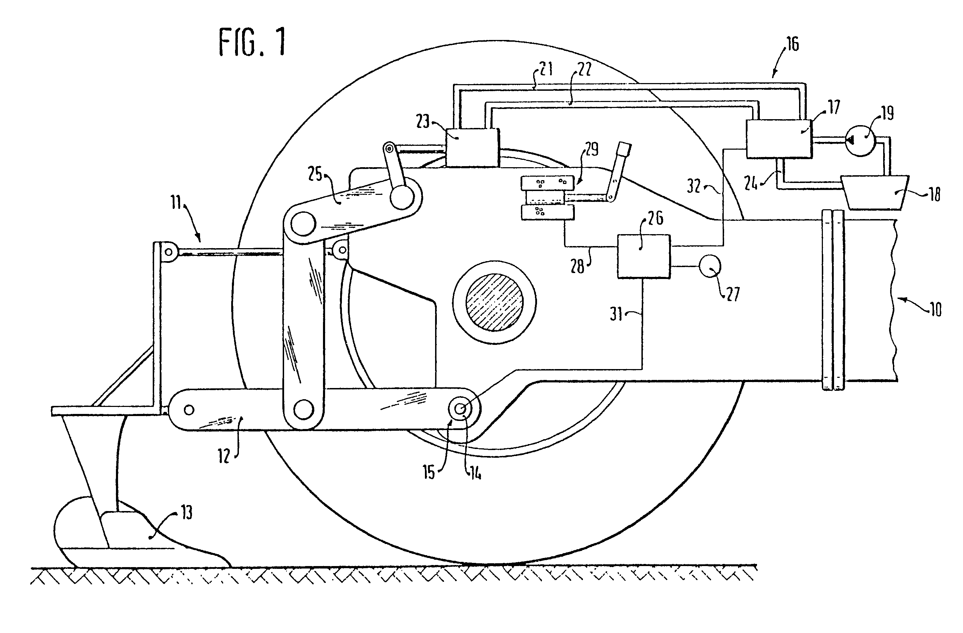

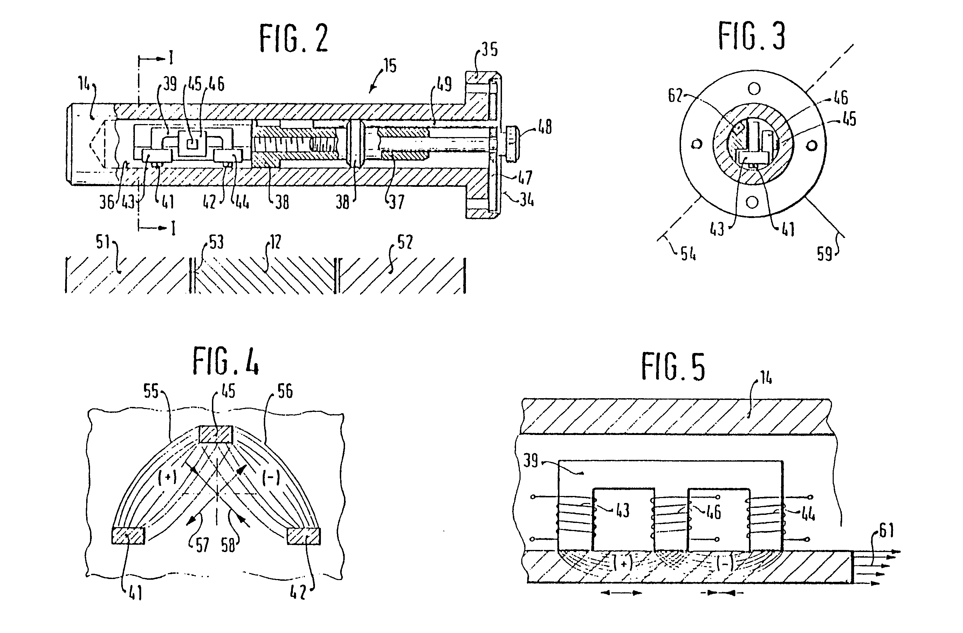

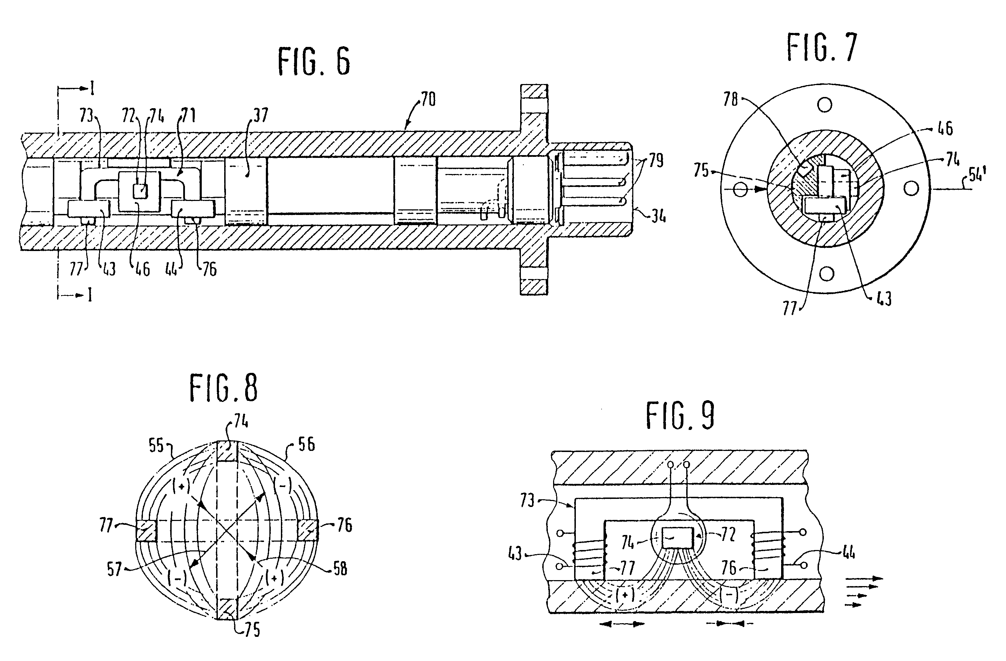

Ein Ausführungsbeispiel der Erfindung ist in der Zeichnung dargestellt und in der nachfolgenden Beschreibung näher erläutert. Es zeigen Figur 1 ein (den Gegenstand des Stammpatents EP-A 0 033 923 bildende) elektrohydraulische Steuereinrichtung für eine Zugkraftregelung an einem Traktor mit magnetoelastischem Kraftmesser in vereinfachter Darstellung, Figur 2 einen Längsschnitt durch den magnetoelastischen, als Transformatorgeber ausgebildeten Kraftmesser, wie er in Figur 1 verwendet wird, Figur 3 einen Querschnitt gemäss I-I nach Figur 2 sowie die Figuren 4 und 5 den Spannungsverlauf und den Magnetflusslinienverlauf beim Kraftmesser nach Figur 2. Die Figuren 6 bis 9 zeigen eine zweite Ausführungsform des Kraftmessers in entsprechender Weise wie in Figur 2 bis 5.

Beschreibung der Ausführungsbeispiele

Die Figur 1 zeigt als Maschine einen Traktor 10, an dem über ein übliches Dreipunktgestänge 11 mit einem Unterlenker 12 als bewegliches kraftübertragendes Element ein Pflug 13 angelenkt ist. Der Unterlenker 12 ist über einen als Schwenklager dienenden Bolzen 14 am Gehäuse des Traktors 10 schwenkbar gelagert, wobei der Bolzen zugleich ein Teil eines magnetoelastischen Kraftmessers 15 bildet. Zum Heben und Senken des Unterlenkers 12 ist auf dem Traktor 10 eine hydraulische Einrichtung 16 vorgesehen. Zu dieser Einrichtung 16 gehört ein elektromagnetisch betätigbares Wegeventil 17, das aus einem Tank 18 über eine Pumpe 19 mit Druckmittel versorgbar ist. Das Wegeventil 17 steuert über Leitungen 21, 22 einen hydraulischen Kraftheber 23 und steht über eine Rücklaufleitung 24 mit dem Tank 18 in Verbindung. Zum Betätigen des Unterlenkers 12 ist der Kraftheber 23 über ein Hubgestänge 25 am Unterlenker 12 angelenkt. Ferner ist am Traktor 10 eine elektronische Steuereinrichtung 26 angeordnet, die mit einer Stromquelle 27 in Verbindung steht. Ferner ist die Steuereinrichtung 26 zur Sollwerteingabe über eine erste elektrische Leitung 28 mit einem Sollwertwertgeber 29 verbunden. Zur Istwerteingabe führt von der Steuereinrichtung 26 eine zweite elektrische Leitung 31 zum Kraftmesser 15. Eine dritte elektrische Leitung 32 verbindet die Steuereinrichtung 26 mit dem Magneten des Wegeventils 17.

Der Kraftmeser 15 nach Figur 1 ist in Figur 2 und 3 näher dargestellt, auf die im folgenden nun eingegangen wird. Der Bolzen 14 hat an einer Stirnseite 34 einen Bund 35. Von der Stirnseite 34 aus ist im Bolzen 14 eine als Aussparung dienende Sacklochbohrung 36 angeordnet, die bis nahe zur anderen Stirnseite des Bolzens reicht. In die Sacklochbohrung 36 ist ein Trägerkörper 37 eingesetzt und über zwei Kolbenabschnitte 38 in ihr geführt. An dem am weitesten in die Sacklochbohrung 36 hineinragenden Ende des Trägerkörpers 37 ist ein als Formteil mit drei Schenkeln ausgebildeter Spulenkern 39 befestigt. Die beiden äusseren, in derselben Ebene liegenden Schenkel des Spulenkerns 29 bilden Pole 41 und 42 und tragen die beiden Sekundärspulen 43 und 44. Der mittlere Schenkel des Spulenkerns 39 mit seinem Pol 45 ist in eine zu den äusseren Schenkeln um 90° versetzte Ebene umgebogen und trägt eine Primärspule 46. Der Spulenkern 39 ist so angeordnet, dass die von den Enden der Schenkel gebildeten Pole 41, 42, 45 möglichst nahe an der Innenwand der Sacklochbohrung 36 liegen. Die Sacklochbohrung 36 wird an der Stirnseite 34 durch eine Deckscheibe 47 verschlossen. In der Deckscheibe 47 ist eine Einstellschraube 48 gelagert, die mit ihrem freien Ende in den Trägerkörper 37 hineinragt und mit deren Hilfe der Trägerkörper 37 in seiner axialen Lage verstellbar ist. Damit der Trägerkörper 37 im Bolzen 14 seine vorgesehene Winkellage einhält, ist in der Deckscheibe eine Führungsstange 49 befestigt, die durch eine Ausnehmung im Bund 38 des Trägerkörpers 37 hindurchführt. Die elektrischen Anschlüsse für die Primärspule 46 und die Sekundärspulen 43, 44 sind in nicht näher gezeichneter Weise durch den Trägerkörper 37 hindurch nach aussen geführt. Mit dem Bolzen 14 wird der Unterlenker 12 zwischen zwei am Gehäuse des Traktors 10 befestigten Augen 51, 52 gelagert. Dabei kommt der Spulenkern 39 im Bereich der Trennebene 53 zwischen Auge 51 und Unterlenker 12 zu liegen, wo die Schubspannungen im Bolzen 14 am grössten sind. Wie Figur 3 näher zeigt, greift die vom Unterlenker 12 ausgeübte Kraft in Richtung der Linie 54 am Bolzen 14 an. Dadurch wird erreicht, dass die Magnetflusslinien über den Wandbereich des Bolzens 14 in einem Bereich hoher Schubspannung verlaufen. Der Bolzen 14 selbst besteht aus weichmagnetischem Material, damit der erwähnte Magnetlinienfluss stattfinden kann.

Die Wirkungsweise der elektrohydraulischen Steuereinrichtung am Traktor 10 zur Zugkraftregelung des angehängten Pfluges 13 wird wie folgt erläutert. Da das Prinzip der Zugkraftregelung an sich bekannt ist, soll hier nur kurz darauf eingegangen werden. Mit dem Sollwertgeber 29 wird beim Pflügen eine Zugkraft bestimmter Grösse gewählt. Die vom Pflug 13 auf den Unterlenker 12 ausgeübte Kraft wird vom Kraftmesser 14 in eine dazu proportionale elektrische Grösse umgewandelt, die der elektronischen Steuereinrichtung 26 eingegeben wird. Das Steuergerät 26 vergleicht den über die erste Leitung 28 ankommenden Sollwert mit dem über die zweite Leitung 31 ankommenden Istwert. Sind beide Werte gleich, so fliesst kein Signal über die dritte elektrische Leitung 32 zu den Magneten des Wegeventils 17. Damit wird die Pumpe 19 über das Wegeventil 17 zum Tank 18 entlastet, während der Kraftheber 23 hydraulisch blockiert ist. Der Kraftheber 23 hält über das Hubgestänge 25 den Unterlenker 12 und damit den Pflug 13 in der jeweiligen Lage. Ändert sich nun die Kraft auf den Pflug 13 und damit im Unterlenker 12, so weicht das vom Kraftmesser 15 zurückgemeldete Istwertsignal vom Sollwertsignal ab. Die elektronische Steuereinrichtung 26 bildet ein Differenzsignal und steuert damit das Wegeventil 17 derart, dass von der Pumpe 19 zum Kraftheber 23 fliessendes Druckmittel über das Hubgestänge 25 den Unterlenker 12 solange und in einer solchen Richtung bewegt, bis das vom Kraftmesser 15 zurückgemeldete Istwertsignal und das vom Sollwertgeber 29 gemeldete Signal gleich gross sind.

Bei dieser Zugkraftregelung arbeitet der zur Übertragung der Zugkräfte vom Unterlenker auf das Gehäuse des Traktors 10 ohnedies notwendige Bolzen 14 zugleich als Teil eines magnetoelastischen Kraftmessers 15. Dieser Kraftmesser 15 macht sich den Effekt zunutze, dass sich die magnetischen Eigenschaften bestimmter Materialien ändern, wenn sie einer mechanischen Spannung unterworfen werden. Wie aus Figur 2 deutlicher erkennbar ist, kommt der Unterlenker 12 zwischen zwei gehäusefeste Augen 51, 52 zu liegen. Die axiale Lage des Trägerkörpers 37 wird nun so gewählt, dass der Spulenkern 39 mit seinen Spulen 43, 44, 46 im wesentlichen in der Trennebene 53 zwischen dem einen Auge 51 und dem Unterlenker 12 zu liegen kommt. Der Spulenkern 39 liegt damit in einem Bereich, in dem im Bolzen 14 die grössten Schubspannungen infolge der im Unterlenker 12 auftretenden Kräfte herrschen. An die Primärspule 46 wird nun eine konstante Spannung angelegt. An den beiden äusseren Sekundärspulen 43, 44 wird die Messspannung abgegriffen. Dabei werden die Sekundärspulen 43, 44 so geschaltet, dass der Kraftmesser nach der Differenzmessmethode arbeitet. Wie in Figur 4 und 5 näher gezeigt ist bilden sich zwischen den Polen 41 und 45 Magnetflusslinien 55 sowie zwischen den Polen 42 und 45 Magnetflusslinien 56 aus, welche den Wandbereich des Bolzens 14 durchdringen, der aus weichmagnetischem Material besteht. Im Bereich dieser Magnetflusslinien 55, 56 wirken im Material des Bolzens 14 infolge der auftretenden Schubspannung zwischen den Polen 41 und 45 eine Zugspannung sowie zwischen den Polen 42 und 45 eine Druckspannung 58. Ändert sich die Kraftrichtung, dann wechseln auch Zug- und Druckspannung und damit die Richtung des elektrischen Signals. Wegen der Magnetoelastizität des Materials wird im Bereich der Zugspannung 57 die Permeabilität des Bolzens 14 erhöht, während sie im Bereich der Druckspannung 58 abnimmt. Die Folge davon ist eine Kopplungsänderung zwischen der Primärspule 46 und den Sekundärspulen 43, 44, wodurch eine zu der jeweils auftretenden Zugkraft im Unterlenker 12 proportionale Messspannung abgegriffen werden kann. Mit Hilfe der Führungsstange 49 und der Abdeckscheibe 47 lässt sich dabei erreichen, dass der Spulenkern 39 stets in einer solchen Lage gehalten wird, dass eine Winkelhalbierende 59 zwischen dem mittleren Schenkel mit Pol 45 und einem äusseren Schenkel mit Pol 41 im wesentlichen senkrecht zur Linie 54 verläuft, wie dies aus Figur 3 näher ersichtlich ist. Auf diese Weise wird erreicht, dass die Magnetflusslinien 55, 56 in einem Bereich des Bolzens 14 verlaufen, in dem die Schubspannung am grössten ist. Durch die Anordnung des Spulenkerns 39 mit seinen Spulen im Innern des Bolzens 14 wird zudem eine hohe Signalausbeute begünstigt, weil der Schubspannungsverlauf 61 in einer Rohrwand von aussen nach innen hin ansteigt, wie dies in Figur 5 dargestellt ist.

Die Figuren 6, 7, 8 und 9 zeigen einen zweiten Kraftmesser 70 in entsprechender Weise wie der erste Kraftmesser 15 nach den Figuren 2 bis 5. Gleiche Teile wie in den Figuren 2 bis 5 sind mit gleichen Bezugzeichen versehen. Der zweite Kraftmesser 70 unterscheidet sich von demjenigen nach Figur 2 vor allem durch seine andere Messspulenanordnung mit einem anderen Spulenkern 71. Letzterer besteht aus einem stabförmigen, ersten Kernteil 72, auf dem die Primärspule 46 sitzt und aus einem zweiten, U-förmigen Kernteil 73, das die beiden Sekundärspulen 43, 44 trägt. Das erste Kernteil 72 ist so lang wie der Innendurchmesser der Sacklochbohrung 36 und bildet zwei Pole 74, 75. Seine Längsachse verläuft senkrecht zu einer Ebene, in welcher das zweite Kernteil 73 liegt. Die Pole 74, 75 des ersten Kernteils 72 sowie beide Pole 76, 77 des zweiten Kernteils 73 liegen somit in bezug auf eine Abwicklung der Innenwand der Sacklochbohrung 36 auf den Eckpunkten eines gedachten Quadrates, wie dies vor allem Figur 8 näher veranschaulicht. Die Längsachse des ersten Kernteils 72 liegt in Zugkraftrichtung des Unterlenkers, so dass sich die Magnetflusslinien 55, 56 im Wandbereich des Bolzens 14 des Kraftmessers 70 in einem Bereich maximaler Spannung ausbilden. Eine Blattfeder 78 hält die Pole 74 bis 77 des Spulenkerns 71 anliegend an der Wand der Sacklochbohrung 36. Die elektrischen Anschlüsse des Kraftmessers 70 sind an der Stirnseite 34 als Steckkontakte 79 herausgeführt.

Die Wirkungsweise des zweiten Kraftmessers 70 ist prinzipiell mit der des ersten Kraftmessers 15 vergleichbar. Von Vorteil ist sein beträchtlich höheres Nutzsignal bei relativ geringem Bauaufwand vor allem durch die vierpolige Ausbildung des Spulenkerns 71.

Mit der vorgeschlagenen Ausbildung eines Bolzens als Schwenklager für ein kräfteübertragendes Element einer Maschine als magnetoelastischer Kraftmesser wird eine äusserst einfach bauende und robust arbeitende Messeinrichtung erreicht. Der Kraftmesser ist zudem unempfindlich gegen Verschmutzung und eignet sich somit besonders gut für einen rauhen Betrieb. Zudem lässt er sich leicht montieren und bei Defekten auch leicht austauschen. Ferner ist von Vorteil, dass durch seine Ausbildung und Anordnung die elektrischen Anschlüsse zu einem fest mit einem Maschinenelement verbundenen Bauelement führen. Besonders zweckmässig ist ferner, dass durch die axiale Lage des Spulenkerns 39, 71 relativ zur Trennebene 53, sowie durch seine Winkellage relativ zur Kraftrichtung im Unterlenker 12 sowie durch seine Anordnung im Hohlraum des Bolzens 14 ein Maximum an Signalausbeute erzielbar ist. Vorteilhaft ist ferner seine Bauweise mit drei Schenkeln und Spulen, wodurch er nach der Differenzmessmethode arbeiten kann. Selbstverständlich kann auch eine Lagerung gewählt werden, bei der der Bolzen nur einseitig gehäusefest eingespannt ist.

Für jedes kräfteübertragende Element in der Maschine kann ein eigener Kraftmesser vorgesehen werden. Der vorgeschlagene Kraftmesser kann auch bei anderen Maschinen und Fahrzeugen eingesetzt werden, bei denen das Problem des elektrischen Messens mechanischer Spannungen in gleichartiger Weise auftritt. Obgleich die gezeigte Bauart des Kraftmessers 15 besonders vorteilhaft ist, lassen sich auch Bauarten mit zwei oder mehr als drei Spulen verwirklichen, je nachdem wie gross die Signalausbeute sein muss. Auch kann bei den gezeigten Bauarten der Spulenkern 39 in eine Trennebene zwischen Unterlenker 12 und Auge 52 gelegt werden. Ebenso kann die Winkellage des Spulenkerns gegenüber der in Figur 3 gezeigten Lage um 180° geschwenkt werden. Für den Bolzen 14 können weichmagnetische Materialien verwendet werden, deren relative Permeabiliität abhängig von den auftretenden, mechanischen Spannungen entweder steigt oder fällt.

**Patentansprüche**

1. Magnetoelastischer Kraftmesser zur Bestimmung der auf ein bewegliches kraftübertragendes Element (12) einer Maschine (10) einwirkenden Kraft, mit

– einem an mindestens einer Stelle in der Maschine gelagerten, aus ferromagnetischem Material bestehenden balkenartigen Bauelement (14), in das die zu bestimmende Kraft senkrecht bezüglich der Längsachse des Bauelements eingeleitet wird,
– einer wenigstens eine Primärspule (46) und eine Sekundärspule (43, 44) umfassenden Messspulenanordnung, deren Spulen auf Spulenkernen (39; 71) angebracht und in Aussparungen (36) des Bauelementes (14) zur Erfassung der im Bauelement von der zu bestimmenden Kraft erzeugten Schubspannungen angeordnet sind, dadurch gekennzeichnet, dass
– das balkenartige Bauelement aus einem als Schwenklager für das kraftübertragende Element fungierenden rohrförmigen Bolzen (14) besteht, in dessen die Aussparungen bildender Bohrung (36) die Messspulenanordnung angeordnet ist,
– die an den Spulenkernen (39; 71) ausgebildeten Pole (41, 42, 45; 74–77) an der Wand der Bohrung (36) so anliegen, dass die Magnetflusslinien (55, 56) zwischen wenigstens einem Pol (45; 74, 75) der Primärspule (46) und wenigstens einem Pol (41, 42; 76, 77) der Sekundärspule (43, 44) in einem Wandbereich des Bolzens verlaufen, der sich senkrecht bezüglich der Richtung der Kraft erstreckt und der eine maximale Schubspannung erfährt,
– die Pole (41, 42, 45; 74–77) der Primär- und Sekundärspule in Umfangsrichtung der Bohrung (36) um 90° gegeneinander versetzt sind.

2. Magnetoelastischer Kraftmesser nach Anspruch 1, dadurch gekennzeichnet, dass die Spulenkerne (39; 71) in einem Bereich der Bohrung (36) angeordnet sind, der sich teils in dem die Lagerstelle des Bolzens in der Maschine teils in dem das Schwenklager bildenden Abschnitt des Bolzens erstreckt.

3. Magnetoelastischer Kraftmesser nach Anspruch 1 oder 2, dadurch gekennzeichnet, dass die Winkelhalbierende des Winkels zwischen den Schenkeln der Magnetkerne, die die um 90° versetzten Pole bilden, im wesentlichen senkrecht zur Richtung der zu bestimmenden Kraft verläuft.

4. Magnetoelastischer Kraftmesser nach einem der Ansprüche 1 bis 3, dadurch gekennzeichnet, dass der Bolzen (14) in der Bohrung (36) einen die Spulenkerne (39; 71) mit den Spulen (43, 44, 46) in der gewünschten Position haltenden Trägerkörper (37) aufweist.

5. Magnetoelastischer Kraftmesser nach Anspruch 3 oder 4, dadurch gekennzeichnet, dass die die Primär- und Sekundärspule tragenden Spulenkerne aus einem Formteil mit drei Schenkeln bestehen, von denen der mittlere (45) die Primärspule (46) und die beiden äusseren (41, 42) die Sekundärspulen (43, 44) tragen.

6. Magnetoelastischer Kraftmesser nach einem der Ansprüche 1, 2 oder 4, dadurch gekennzeichnet, dass die Spulenkerne (71) einen der Primärspule (46) zugeordneten, stabförmigen ersten Kernteil (72) aufweisen, der zwei Pole (74, 75) bildet und dessen Längsachse mindestens nahezu zu einer Ebene verläuft, in der auch die Richtung der zu messenden Kraft (54) liegt.

7. Magnetoelastischer Kraftmesser nach Anspruch 6, dadurch gekennzeichnet, dass die Spulenkerne (71) einen zweiten U-förmigen Kernteil (73) aufweisen, dessen Schenkel die Sekundärspulen (43, 44) tragen und der in einer senkrecht zur Längsachse des ersten Kernteils (72) verlaufenden Ebene liegt, und dass die Länge des ersten Kernteils (72) dem Durchmesser der Bohrung (36) im Bolzen (14) entspricht.

8. Magnetoelastischer Kraftmesser nach Anspruch 6 oder 7, dadurch gekennzeichnet, dass die vier Pole (74, 75, 76, 77) der beiden Kernteile in bezug auf eine Abwicklung der Innenwand der Bohrung (36) auf den Ecken eines Quadrats liegen.

9. Magnetoelastischer Kraftmesser nach einem der Ansprüche 4 bis 8, dadurch gekennzeichnet, dass im Trägerkörper (37) eine Feder (78) angeordnet ist, welche die Pole (74 bis 77) an der Wand der Bohrung (36) anliegend hält.

**Claims**

1. Magneto-elastic dynamometer for determining the force acting on a moving power-transmitting element (12) of a machine (10), comprising:

– a bar-like construction element (14) which consists of ferromagnetic material and which is supported at at least one point in the machine and into which the force to be determined is introduced perpendicularly with respect to the longitudinal axis of the construction element,
– a measuring coil arrangement which comprises at least one primary coil (46) and one secondary coil (43, 44) and the coils of which are mounted on coil cores (39; 71) and are arranged in recesses (36) of the construction element (14) for detecting the shear stresses generated in the construction element by the force to be determined, characterised in that
– the bar-like construction element consists of a tubular bolt (14) which acts as swivel bearing for the force-transmitting element and in whose drilled hole (36), forming the recesses, the arrangement of measuring coils is arranged,
– the poles (41, 42, 45; 74–77) formed at the coil cores (39; 71) rest against the wall of the drilled hole (36) in such a manner that the magnetic lines of flux (55, 56) extend between at least one pole (45; 74, 75) of the primary coil (46) and at least one pole (41, 42; 76, 77) of the secondary coil (43, 44) in a wall area of the bolt which extends perpendicularly with respect to the direction of the force and which is subjected to a maximum shear stress,
– the poles (41, 42, 45; 74–77) of the primary and secondary coil are mutually off set by 90° in the peripheral direction of the drilled hole (36).

2. Magneto-elastic dynamometer according to Claim 1, characterised in that the coil cores (39; 71) are arranged in an area of the drilled hole (36) which extends partly in the bolt section forming the bearing location of the bolt in the machine and partly in the bolt section forming the swivel bearing.

3. Magneto-elastic dynamometer according to Claim 1 or 2, characterised in that the bisecting line of the angle between the arms of the magnetic cores which form the poles offset by 90° essentially extends perpendicularly to the direction of the force to be determined.

4. Magneto-elastic dynamometer according to one of Claims 1 to 3, characterised in that the bolt (14) is provided in the drilled hole (36) with a carrier body (37) which holds the coil cores (39; 71) with the coils (43, 44, 46) in the desired position.

5. Magneto-elastic dynamometer according to Claim 3 or 4, characterised in that the coil cores carrying the primary and secondary coil consist of a moulded part having three arms of which the centre arm (45) carries the primary coil (46) and the two outer arms (41, 42) carry the secondary coils (43, 44).

6. Magneto-elastic dynamometer according to one of Claims 1, 2 or 4, characterised in that the coil cores (71) are provided with a rod-shaped first core part (72) which is associated with the primary coil (46) and which forms two poles (74, 75) and the longitudinal axis of which extends at least substantially in a plane in which the direction of the force (54) to be measured is also located.

7. Magneto-elastic dynamometer according to Claim 6, characterised in that the coil cores (71) are provided with a second U-shaped core part (73) the arms of which carry the secondary coils (43, 44) and which is located in a plane extending perpendicularly to the longitudinal axis of the first core part (72), and that the length of the first core part (72) corresponds to the diameter of the drilled hole (36) in the bolt (14).

8. Magneto-elastic dynamometer according to Claim 6 or 7, characterised in that the four poles (74, 75, 76, 77) of the two core parts are located at the corners of a square with reference to a developed view of the inside wall of the drilled hole (36).

9. Magneto-elastic dynamometer according to one of Claims 4 to 8, characterised in that in the carrier body (37) a spring (78) is arranged which keeps the poles (74 to 77) resting against the wall of the drilled hole (36).

## Revendications

1. Dynamomètre magnéto-élastique pour déterminer l'effort agissant sur un élément mobile transmetteur d'effort (12) d'une machine (10) comprenant:

- un élément de construction (14) semblable à une poutre, en matériau ferromagnétique, monté à au moins un endroit dans la machine et auquel l'effort à déterminer est appliqué perpendiculairement à son axe longitudinal,
- une disposition de bobines de mesure, possédant au moins une bobine primaire (46) et une bobine secondaire (43, 44) dont les bobines sont montées sur des noyaux de bobines (39; 71) et sont disposées dans des évidements (36) de l'élément de construction (14) pour détecter les contraintes au cisaillement engendrées dans l'élément de construction par l'effort à déterminer, caractérisé en ce que
- l'élément de construction semblable à une poutre est un axe tubulaire (14) servant de palier d'oscillation pour l'élément transmetteur d'effort, dont l'alésage (36), formant les évidements, reçoit la disposition de bobines de mesure,
- les pôles (41, 42, 45; 74-77), formés sur les noyaux de bobines (39; 71) sont disposés contre la paroi de l'alésage (36) de manière que les lignes de flux magnétique (55, 56) passent, entre au moins un pôle (45; 74, 75) de la bobine primaire (46) et au moins un pôle (41, 42; 76, 77) de la bobine secondaire (43, 44), dans une région de la paroi de l'axe perpendiculaire à la direction de l'effort et soumise à une contrainte au cisaillement maximale,
- les pôles (41, 42, 45; 74-77) des bobines primaire et secondaire sont mutuellement décalés de 90° dans le sens de la circonférence de l'alésage (36).

2. Dynamomètre magnéto-élastique selon la revendication 1, caractérisé en ce que les noyaux de bobines (39; 71) sont disposés dans une région de l'alésage (36) qui s'étend en partie dans le tronçon de l'axe formant le point de montage de l'axe dans la machine et en partie dans le tronçon de l'axe formant le palier d'oscillation.

3. Dynamomètre magnéto-élastique selon la revendication 1 ou 2, caractérisé en ce que la bissectrice de l'angle entre les branches des noyaux magnétiques, lesquelles forment les pôles mutuellement décalés de 90°, est orientée sensiblement perpendiculairement à la direction de l'effort à déterminer.

4. Dynamomètre magnéto-élastique selon une des revendications 1 à 3, caractérisé en ce que l'axe (14) présente, à l'intérieur de l'alésage (36), un support (37) maintenant les noyaux de bobines (39; 71) avec les bobines (43, 44, 46) à la position désirée.

5. Dynamomètre magnéto-élastique selon la revendication 3 ou 4, caractérisé en ce que les noyaux de bobines portant les bobines primaire et secondaire sont constitués par une pièce moulée présentant trois branches, dont la branche médiane (45) porte la bobine primaire (46) et dont les deux branches extérieures (41, 42) portent les bobines secondaires (43, 44).

6. Dynamomètre magnéto-élastique selon une des revendications 1, 2 ou 4, caractérisé en ce que les noyaux de bobines (71) présentent une première partie de noyau (72) en forme de barreau qui est prévue pour la bobine primaire (46), qui forme deux pôles (74, 75) et dont l'axe longitudinal s'étend au moins à peu près dans un plan contenant également la direction de l'effort à mesurer (54).

7. Dynamomètre magnéto-élastique selon la revendication 6, caractérisé en ce que les noyaux de bobines (71) présentent une deuxième partie de noyau (73) en forme de U, dont les branches portent les bobines secondaires (43, 44) et qui est située dans un plan perpendiculaire à l'axe longitudinal de la première partie de noyau (72), et en ce que la longueur de la première partie de noyau (72) correspond au diamètre de l'alésage (36) de l'axe (14).

8. Dynamomètre magnéto-élastique selon la revendication 6 ou 7, caractérisé en ce que les quatre pôles (74, 75, 76, 77) des deux parties de noyau sont situés sur les angles d'un carré formé par un développement de la paroi de l'alésage (36).

9. Dynamomètre magnéto-élastique selon une des revendications 4 à 8, caractérisé en ce que le support (37) contient un ressort (78) qui maintient les pôles (74 à 77) appliqués contre la paroi de l'alésage (36).

FIG. 1

FIG. 3

FIG. 5

FIG. 2

FIG. 4

FIG. 6

FIG. 7

FIG. 8

FIG. 9

0 070 442